Europäisches Patentamt

European Patent Office

Office européen des brevets

(19)

(11) Publication number: **0 384 517 B1**

# EUROPEAN PATENT SPECIFICATION

(12)

(45) Date of publication of patent specification: **18.01.95**  (51) Int. Cl.6: **C08G 67/02**

(21) Application number: **90200322.7**

(22) Date of filing: **12.02.90**

(54) **Copolymers of carbon monoxide.**

(30) Priority: **20.02.89 NL 8900407**

(43) Date of publication of application:
**29.08.90 Bulletin 90/35**

(45) Publication of the grant of the patent:
**18.01.95 Bulletin 95/03**

(84) Designated Contracting States:
**AT BE CH DE DK ES FR GB IT LI NL SE**

(56) References cited:
**EP-A- 0 322 018**

**CHEMICAL ABSTRACTS, vol. 113, no. 4, 23rd
July 1990, page 20, abstract no.24785n, Co-
lumbus, Ohio, US; P. CORRADINI et al.: "The
structure of
poly(1-oxo-2-phenyltrimethylene): a crystal-
line alternating styrene-carbon monox-
idecopolymer", & CHIMIA 1990, 44(3), 52-4**

(73) Proprietor: **SHELL INTERNATIONALE RE-
SEARCH MAATSCHAPPIJ B.V.
Carel van Bylandtlaan 30
NL-2596 HR Den Haag (NL)**

(72) Inventor: **Wong, Pui Kwan
Carel van Bylandtlaan 30
NL-2596 HR The Hague (NL)**

EP 0 384 517 B1

Rank Xerox (UK) Business Services
(3.10/3.09/3.3.3)

## Description

The invention relates to novel copolymers of carbon monoxide with an alpha-olefin having at least three carbon atoms in the molecule, and to a process for their preparation.

Linear copolymers of carbon monoxide with ethene, in which polymers the units originating in carbon monoxide on the one hand and the units originating in ethene on the other hand, occur in alternating order, can be prepared by contacting the monomers with a catalyst composition based upon:

a) a palladium compound,

b) an anion of an acid with a pKa of less than 2, and

c) a symmetric bisphosphine of the general formula $(R^1)_2P\text{-}R\text{-}P(R^1)2$, wherein $R^1$ is an optionally polar-substituted hydrocarbyl group and R is a bivalent organic bridging group containing at least two carbon atoms in the bridge that connects the two phosphorus atoms.

For the structure of the copolymers obtained, it makes no difference whether they are prepared using a catalyst composition which includes a bisphosphine in which $R^1$ is aromatic, or a bisphosphine in which $R^1$ is aliphatic. In both cases, the same linear alternating carbon monoxide/ethene copolymers are obtained.

The Applicant has recently carried out an investigation into whether the afore-mentioned catalyst compositions can be employed to prepare linear alternating copolymers of carbon monoxide with an alpha-olefin having at least three carbon atoms in the molecule (for the sake of brevity referred to as $C_3$+alpha-olefins). In the investigation it was found that such copolymers can indeed be prepared in this way. Contrary to what was first observed during the preparation of the carbon monoxide/ethene copolymers, it was also found that for the structure of the carbon monoxide/$C_3$+alpha-olefin copolymers obtained, it is very important which bisphosphine is present in the catalyst composition used. When a catalyst composition is employed which includes a bisphosphine in which $R^1$ is aromatic, such as 1,3-bis[bis(2-methoxyphenyl)phosphino]propane, the copolymer obtained is regio-irregular, whereas when a catalyst composition is employed which includes a bisphosphine in which $R^1$ is aliphatic, such as 1,3-bis(di-n-butylphosphino)propane, the copolymer obtained is regio-regular but stereo-irregular. The descriptions regio-regular and regio-irregular refer to the way in which the monomers have been incorporated in the polymer chains. If this incorporation has come about in a regular way, then in the resulting copolymers, the units originating in the $C_3$+alpha-olefin are attached substantially in a head/tail fashion to the units originating in carbon monoxide. Such copolymers are referred to as regio-regular. If the incorporation has occurred in a random way, then in the resulting copolymers, the units originating in the $C_3$+alpha-olefin are attached in a head/tail fashion to no more than about 50% of the units originating in carbon monoxide. Such copolymers are referred to as regio-irregular. On the basis of the configurations of the asymmetric carbon atoms present in the polymer chains, the regio-regular copolymers can be divided into stereo-regular and stereo-irregular copolymers. If the configuration of the asymmetric carbon atoms present in the polymer chain is substantially regular, the copolymers are referred to as stereo-regular. If it is a random configuration, the copolymers are referred to as stereo-irregular. The latter copolymers are obtained when during the copolymerization of carbon monoxide with a $C_3$+alpha-olefin, use is made of a symmetric bisphosphine $(R^1)_2P\text{-}R\text{-}P(R^1)_2$, wherein $R^1$ is aliphatic.

Further research done by the Applicant into the preparation of linear alternating copolymers of carbon monoxide with a $C_3$+alpha-olefin has now shown that stereo-regular copolymers can be prepared by contacting the monomers with a catalyst composition on the basis of the afore-mentioned components a) and b) and as component c) an asymmetric bisphosphine of the general formula $R^3R^4P\text{-}R^5\text{-}PR^3R^4$, wherein $R^3$ and $R^4$ are identical or different optionally polar-substituted hydrocarbyl groups and $R^5$ is a bivalent organic bridging group containing at least two carbon atoms in the bridge that connects the two phosphorus atoms.

In the present patent application, asymmetric bisphosphines should be taken to be bisphosphines whose molecules have such a structure that a plane of symmetry is missing, so that they are not superposable on their mirror images. Depending on the number of asymmetric centres in the bisphosphines, the latter can occur in various optically active forms. Optically inactive mixtures of optically active bisphosphines may also be used. When optically inactive mixtures of optically active bisphosphines are used in the catalyst compositions as components c), then the copolymers obtained are stereo-regular linear alternating carbon monoxide/$C_3$+alpha-olefin copolymers which are optically inactive. When an optically active bisphosphine is used in the catalyst composition as component c), then the copolymers obtained are stereo-regular linear alternating carbon monoxide/$C_3$+alpha-olefin copolymers which also show optical activity.

Stereo-regular linear alternating copolymers of carbon monoxide with a $C_3$+alpha-olefin are novel. Naturally, this holds both for the optically inactive and for the optically active copolymers.

The present patent application therefore relates to novel copolymers of carbon monoxide with a $C_3$+alpha-olefin, which copolymers are made up of linear chains in which the units originating in carbon monoxide on the one hand and the units originating in the applied alpha-olefins on the other hand, occur in alternating order, and which copolymers are stereo-regular.

The present patent application further relates to a process for the preparation of such copolymers.

As regards the monomers used in the preparation of the copolymers of the invention, it is preferred to employ $C_3$+alpha-olefins with at most 10 carbon atoms in the molecule, and in particular propene.

The copolymers of the invention may be prepared by contacting the monomers with a solution of a catalyst composition in a diluent, which catalyst composition is based upon:

a) a palladium compound,
b) an anion of an acid with a pKa of less than 2, and
c) an asymmetric bisphosphine of the general formula $R^3R^4P-R^5-PR^3R^4$, wherein $R^3$ and $R^4$ are identical or different optionally polar-substituted hydrocarbyl groups and $R^5$ is a bivalent organic bridging group containing in the bridge that connects the two phosphorus atoms, at least two carbon atoms.

The preparation of the copolymers of the invention is preferably carried out at a temperature of from 20 to 100°C, an overall pressure of from 5 to 150 bar and by employing such a quantity of catalyst composition as to contains $10^{-7}$ to $10^{-3}$ mol of palladium per mol of olefin to be polymerized. Special preference is given to a preparation carried out at a temperature in the range of from 30 to 85°C, an overall pressure in the range of from 20 to 100 bar and by employing such a quantity of catalyst composition as to contain $10^{-6}$ to $10^{-4}$ mol of palladium per mol of olefin to be polymerized. The molar ratio of the $C_3$+alpha-olefin relative to carbon monoxide in the mixture to be polymerized is preferably from 10:1 to 1:10 and in particular from 5:1 to 1:5. Very suitable diluents are lower aliphatic alcohols, such as methanol, and mixtures thereof with cyclic ethers, such as tetrahydrofuran.

The palladium compound employed in the catalyst composition as component a) is preferably a palladium salt of a carboxylic acid, and palladium acetate in particular. Examples of suitable acids with a pKa of less than 2 (determined in aqueous solution at 18°C) are mineral acids, such as perchloric acid, sulphonic acids, such as para-toluenesulphonic acid, and halogen carboxylic acids, such as trifluoroacetic acid. In the catalyst compositions, component b) may be incorporated in the form of an acid and/or in the form of a salt. A very suitable acid is trifluoroacetic acid and a very suitable salt is nickel perchlorate. Preferably, the quantity of component b) present in the catalyst compositions is from 0.5 to 50 and in particular from 1 to 25 mol per mol of palladium.

In the asymmetric bisphosphines of the general formula $R^3R^4P-R^5-PR^3R^4$ that are eligible to be used as component c) in the catalyst compositions, preferably the groups $R^3$ and $R^4$ each contain not more than 10 carbon atoms. Preferably, groups $R^3$ and $R^4$ are identical with one another. In the general formula of the asymmetric bisphosphines the groups $R^3$ and $R^4$ are bound to each other through a phosphorus atom. If desired, yet another bond may exist between the groups $R^3$ and $R^4$, which thus together with the phosphorus atom form part of a cyclic structure. Examples of such asymmetric bisphosphines are alpha,omega-bis(3,4-dialkoxyphospholano)$nC_2$+-alkanes such as 1,2-bis(3,4-dimethoxyphospholano)ethane. Preference is given to asymmetric bisphosphines which in the bridge linking the two phosphorus atoms contain at least two carbon atoms which individually or together are part of a cyclic structure. Examples of asymmetric bisphosphines in which the bridge that connects the two phosphorus atoms with one another contains four carbon atoms, two of which together form part of a cyclic structure, are trans-4,5-bis-(diphenylphosphinomethyl)-2,2-dimethyl-1,3-dioxolane and trans-1,2-bis-(diphenylphosphinomethyl)-cyclohexane.

Examples of asymmetric bisphosphines in which the bridge that connects the two phosphorus atoms with one another contains four carbon atoms, three of which together form part of a cyclic structure, are 2-diphenylphosphinomethyl-4-diphenylphosphinopyrrolidine and N-tert.butoxycarbonyl-2-diphenylphosphinomethyl-4-diphenylphosphinopyrrolidine.

An example of an asymmetric bisphosphine in which the bridge that connects the two phosphorus atoms with one another contains two carbon atoms which together form part of a cyclic structure, is trans-2,3-bis(diphenylphosphino)bicyclo[2.2.1]-heptene-5.

An example of an asymmetric bisphosphine in which the bridge that connects the two phosphorus atoms with one another contains four carbon atoms which in pairs form part of two separate cyclic structures, is 2,2′-bis(diphenylphosphino)-1,1′-binaphthyl.

The preparation of copolymers of the invention gave very favourable results when use was made of catalyst compositions containing as component c) either (+) or (-)-4,5-bis-(diphenylphosphinomethyl)-2,2-dimethyl-1,3-dioxolane, or (-)-4,5-bis(dibutylphosphinomethyl)-2,2-dimethyl-1,3-dioxolane. The asymmetric bisphosphines are preferably employed in the catalyst compositions in a quantity of from 0.5 to 2 and in particular of from 0.75 to 1.5 mol per mol of palladium.

It is preferred that in addition a 1,4-quinone be incorporated as component d) in the present catalyst compositions that are used in the preparation of the polymers of the invention. For this purpose, 1,4-benzoquinones and 1,4-naphthoquinones are very suitable. The quantity of 1,4-quinone used preferably lies in a range of from 1 to 5000 mol and in particular in a range of from 5 to 1000 mol per mol of palladium.

The invention will now be illustrated with the aid of the following examples.

Example 1

A carbon monoxide/propene copolymer was prepared as follows. A mechanically stirred autoclave with a capacity of 300 ml was charged with 130 ml of tetrahydrofuran and 75 ml of propene. After the contents of the autoclave were brought to 42°C, carbon monoxide was blown in until a pressure of 40 bar was reached. Subsequently, a catalyst solution was introduced into the autoclave, which comprised
27 ml methanol,
9 ml toluene,
0.06 mmol palladium acetate,
0.426 mmol nickel perchlorate,
0.72 mmol 1,3-bis[bis(2-methoxyphenyl)-phosphino]propane, and
3.0 mmol 1,4-naphthoquinone.

Polymerization was terminated after 67.28 hours by cooling the reaction mixture to room temperature and releasing the pressure. The reaction mixture was stirred into methanol and the copolymer was filtered off, washed with methanol and dried at 50°C.

9.9 g of copolymer was obtained. The polymerization rate was 23 g copolymer/(g palladium.hour).

Example 2

A carbon monoxide/propene copolymer was prepared substantially in the same way as in Example 1, except for the following differences
a) 110 ml instead of 130 ml of tetrahydrofuran and 80 ml instead of 75 ml of propene were introduced into the autoclave,
b) the catalyst solution used comprised
8.5 ml methanol,
21.5 ml tetrahydrofuran,
0.043 mmol palladium acetate,
0.21 mmol nickel perchlorate, and

0.052 mmol 1,3-bis(di-n-butylphosphino) propane and
3.0 mmol 1,4-naphthoquinone, and
c) the reaction time was 64.5 instead of 67.28 hours.

63 g of copolymer was obtained. The polymerization rate was 214 g copolymer/(g palladium.hour).

Example 3

A carbon monoxide/propene copolymer was prepared substantially in the same way as in Example 1, except for the following differences
a) 110 ml instead of 130 ml of tetrahydrofuran was introduced into the autoclave,
b) carbon monoxide was blown in until a pressure of 45 bar instead of 40 bar was reached,
c) the catalyst solution used comprised
21.5 ml tetrahydrofuran,
8.5 ml methanol,
0.044 mmol palladium acetate,
0.21 mmol nickel perchlorate,
0.047 mmol
(+)-4,5-bis(diphenylphosphinomethyl)-2,2-dimethyl-1,3-dioxolane, and
3.0 mmol 1,4-naphthoquinone,
d) the reaction time was 66.2 instead of 67.28 hours, and
e) the reaction mixture was stirred into water instead of methanol.

0.8 g of copolymer was obtained. The polymerization rate was 2.6 g copolymer/(g palladium.hour).

Example 4

A carbon monoxide/propene copolymer was prepared substantially in the same way as in Example 3, except for the following differences
a) 130 ml instead of 110 ml of tetrahydrofuran was introduced into the autoclave,
b) the catalyst solution comprised 0.053 mmol of (-)-4,5-bis(diphenylphosphinomethyl)-2,2-dimethyl-1,3-dioxolane instead of 0.047 mmol of the (+)-form of this compound, and
c) the reaction time was 42.3 instead of 66.2 hours

0.44 g of copolymer was obtained. The polymerization rate was 2.2 g copolymer/(g palladium.hour).

Example 5

A carbon monoxide/propene copolymer was prepared substantially in the same way as in Example 1, except for the following differences

a) 110 ml instead of 130 ml of tetrahydrofuran and 87 ml instead of 75 ml of propene were introduced into the autoclave,

b) carbon monoxide was blown in until a pressure of 45 bar instead of 40 bar was reached,

c) the catalyst solution used comprised

1.4 ml methanol,

3.9 ml tetrahydrofuran,

0.091 mmol palladium acetate,

0.65 mmol nickel perchlorate,

0.105 mmol (-)-4,5-bis(dibutylphosphinomethyl)-2,2-dimethyl-1,3-dioxolane, and

6.3 mmol 1,4-naphthoquinone,

d) the reaction time was 65.1 instead of 67.28 hours, and

e) the reaction mixture was stirred into water instead of methanol.

6.83 g of polymer was obtained. The polymerisation rate was 10.8 g copolymer/(g Pd.hour).

Of Examples 1-5, Examples 3-5 are examples in accordance with the invention. Examples 1 and 2 fall outside the scope of the invention and have been included herein for comparison. With the aid of $^{13}$C-NMR analysis it was established in the first place that the copolymers prepared according to Examples 1-5 had a linear structure and that in these copolymers, the units originating in carbon monoxide on the one hand and the units originating in propene on the other hand, occurred in alternating order. Further, it was established that the copolymers prepared according to Examples 2-5 had a regio-regular structure in which the units originating in propene were attached to more than 80% of the units originating in carbon monoxide in a head/tail fashion, and that the copolymers prepared according to Example 1 had a regio-irregular structure in which the units originating in propene were attached to only about 50% of the units originating in carbon monoxide in a head/tail fashion. Finally, it was established that of the copolymers with a regio-regular structure prepared according to Examples 2-5, the copolymers prepared according to Example 2 had a stereo-irregular structure, while the copolymers prepared according to Examples 3-5 had a stereo-regular structure. When dissolved in hexafluoro-isopropanol, the copolymers prepared according to Examples 3-5 showed a specific rotation $[\text{alpha}]_D^{25}$ of -6.7°, +6.6°, and +10.4°, respectively. The copolymers prepared according to Example 3 had a melting point of about 165°C.

**Claims**

1. Copolymers of carbon monoxide with an alpha-olefin having at least three carbon atoms in the molecule, characterized in that they are made up of linear chains in which the units originating in carbon monoxide on the one hand and the units originating in the applied alpha-olefin on the other hand, occur in alternating order, and in that they have a stereo-regular structure.

2. Copolymers as claimed in claim 1, characterized in that they are optically active.

3. Copolymers as claimed in claim 1 or 2, characterized in that the alpha-olefin has at most ten carbon atoms in the molecule.

4. Process for the preparation of copolymers as claimed in one or more of claims 1-3, characterized in that the monomers are contacted with a solution of a catalyst composition in a diluent, which catalyst composition is based upon

a) a palladium compound,

b) an anion of an acid with a pKa of less than 2, and

c) an asymmetric bisphosphine of the general formula $R^3R^4P\text{-}R^5\text{-}PR^3R^4$, wherein $R^3$ and $R^4$ are identical or different optionally polar-substituted hydrocarbon groups and $R^5$ is a bivalent organic bridging group containing at least two carbon atoms in the bridge that connects the two phosphorus atoms.

5. Process as claimed in claim 4, characterized in that it is carried out at a temperature in the range of from 20 to 100°C, an overall pressure in the range of from 5 to 150 bar, a molar ratio of the olefin relative to carbon monoxide in the mixture to be polymerized, in the range of from 10:1 to 1:10, and by using such a quantity of catalyst composition as to contain $10^{-7}$ to $10^{-3}$ mol of palladium per mol of olefin to be polymerized.

6. Process as claimed in claim 4 or 5, characterized in that a catalyst composition is employed which includes 0.5 to 50 mol of component b) and 0.5 to 2 mol of component c) per mol of palladium.

7. Process as claimed in one or more of claims 4-6, characterized in that a catalyst composition is employed which includes as component c) a bisphosphine in which the groups $R^3$ and $R^4$ each contain not more than 10 carbon atoms.

8. Process as claimed in claim 7, characterized in that a catalyst composition is employed which includes as component c) a bisphosphine in

which the groups $R^3$ and $R^4$ are identical groups.

9. Process as claimed in one or more of claims 4-8, characterized in that a catalyst composition is employed which includes as component c) a bisphosphine in which the two or more carbon atoms in the bridge that connects the two phosphorus atoms individually or together are part of a cyclic structure.

10. Process as claimed in one or more of claims 4-9, characterized in that a catalyst composition is employed which includes as component c) a bisphosphine which is optically active, such as (+) or (-)-4,5-bis-(diphenylphosphinomethyl)-2,2-dimethyl-1,3-dioxolane, or (-)-4,5-bis-(dibutylphosphinomethyl)-2,2-dimethyl-1,3-dioxolane.

**Patentansprüche**

1. Copolymere aus Kohlenstoffmonoxid und einem alpha-Olefin, welches mindestens drei Kohlenstoffatome im Molekül enthält, dadurch gekennzeichnet, daß sie aus unverzweigten Ketten aufgebaut sind, innerhalb derer einerseits die vom Kohlenstoffmonoxid stammenden Struktureinheiten und andererseits die vom verwendeten alpha-Olefin stammenden Struktureinheiten in alternierender Anordnung auftreten, und dadurch, daß sie eine sterisch geordnete Struktur aufweisen.

2. Copolymere wie in Anspruch 1 beansprucht, dadurch gekennzeichnet, daß sie optisch aktiv sind.

3. Copolymere wie in Anspruch 1 oder 2 beansprucht, dadurch gekennzeichnet, daß das alpha-Olefin höchstens 10 Kohlenstoffatome im Molekül aufweist.

4. Ein Verfahren zur Herstellung von Copolymeren wie in einem oder mehreren der Ansprüche 1 bis 3 beansprucht, dadurch gekennzeichnet, daß die Monomere mit einer Lösung einer Katalysatorzusammensetzung in einem Verdünnungsmittel kontaktiert werden, welche Katalysatorzusammensetzung auf folgenden Bestandteilen basiert:
    a) eine Palladiumverbindung,
    b) ein Anion einer Säure mit einem $pK_a$-Wert von weniger als 2, und
    c) ein asymmetrisches Bisphosphin mit der allgemeinen Formel $R^3R^4P\text{-}R^5\text{-}PR^3R^4$, wobei $R^3$ und $R^4$ identische oder verschiede-

ne, wahlweise mit einer polaren Gruppe substituierte Kohlenwasserstoffgruppen darstellen und $R^5$ eine zweiwertige organische Brückengruppe ist, die mindestens zwei Kohlenstoffatome in der Brücke enthält, welche die zwei Phosphoratome verbindet.

5. Ein Verfahren wie in Anspruch 4 beansprucht, dadurch gekennzeichnet, daß es durchgeführt wird bei einer Temperatur im Bereich von 20 bis 100 °C, einem Gesamtdruck im Bereich von 5 bis 150 bar, einem molaren Verhältnis des Olefins zum Kohlenstoffmonoxid in der Mischung, die polymerisiert werden soll, im Bereich von 10:1 bis 1:10, und unter Verwendung einer solchen Menge an Katalysatorzusammensetzung, daß $10^{-7}$ bis $10^{-3}$ Mol Palladium pro Mol an Olefin, welches polymerisiert werden soll, darin enthalten sind.

6. Ein Verfahren wie in Anspruch 4 oder 5 beansprucht, dadurch gekennzeichnet, daß eine Katalysatorzusammensetzung eingesetzt wird, die 0,5 bis 50 Mol an Bestandteil b) und 0,5 bis 2 Mol an Bestandteil c) pro Mol an Palladium einschließt.

7. Ein Verfahren wie in einem oder mehreren der Ansprüche 4 bis 6 beansprucht, dadurch gekennzeichnet, daß eine Katalysatorzusammensetzung eingesetzt wird, die als Bestandteil c) ein Bisphosphin einschließt, in welchem jede der Gruppen $R^3$ und $R^4$ nicht mehr als 10 Kohlenstoffatome enthält.

8. Ein Verfahren wie in Anspruch 7 beansprucht, dadurch gekennzeichnet, daß eine Katalysatorzusammensetzung eingesetzt wird, die als Bestandteil c) ein Bisphosphin einschließt, in welchem die Gruppen $R^3$ und $R^4$ identische Gruppen sind.

9. Ein Verfahren wie in einem oder mehreren der Ansprüche 4 bis 8 beansprucht, dadurch gekennzeichnet, daß eine Katalysatorzusammensetzung eingesetzt wird, die als Bestandteil c) ein Bisphosphin einschließt, in welchem die zwei oder mehr Kohlenstoffatome in der Brücke, die die zwei Phosphoratome verbindet, einzeln oder zusammen einen Teil einer zyklischen Struktur darstellen.

10. Ein Verfahren wie in einem oder mehreren der Ansprüche 4 bis 9 beansprucht, dadurch gekennzeichnet, daß eine Katalysatorzusammensetzung eingesetzt wird, die als Bestandteil c) ein Bisphosphin einschließt, welches optisch aktiv ist, so wie z. B. (+)- oder (-)-4,5-Bis-

(diphenylphosphinomethyl)-2,2-dimethyl-1,3-dioxolan, oder (-)-4,5-Bis-(dibutylphosphinomethyl)-2,2-dimethyl-1,3-dioxolan.

## Revendications

1. Copolymères de monoxyde de carbone et d'une alpha-oléfine ayant au moins trois atomes de carbone dans la molécule, caractérisés en ce qu'ils sont réalisés à partir de chaînes linéaires dans lesquelles les motifs provenant du monoxyde de carbone, d'une part et les motifs provenant de l'alpha-oléfine utilisée, d'autre part, se trouvent en ordre alterné et ils présentent une structure stéréo-régulière.

2. Copolymères tels que revendiqués dans la revendication 1, caractérisés en ce qu'ils sont optiquement actifs.

3. Copolymères tels que revendiqués dans la revendication 1 ou la revendication 2, caractérisés en ce que l'alpha-oléfine a au maximum dix atomes de carbone dans la molécule.

4. Procédé pour la préparation de copolymères tels que revendiqués dans l'une ou plus d'une parmi les revendications 1 à 3, caractérisés en ce que lesdits monomères sont mis en contact avec une solution d'une composition catalytique dans un diluant, cette composition catalytique étant basée sur :
   a) un composé du palladium,
   b) un anion d'un acide présentant un pKa inférieur à 2, et
   c) une bisphosphine asymétrique de la formule générale $R^3R^4$-P-$R^5$-P$R^3$-$R^4$, dans laquelle $R^3$ et $R^4$ sont des groupes hydrocarbyle, identiques ou différents, à substitution polaire, le cas échéant, et $R^5$ est un groupe de pontage organique bivalent renfermant dans le pont qui relie les deux atomes de phosphore au moins deux atomes de carbone.

5. Procédé tel que revendiqué dans la revendication 4, caractérisé en ce qu'il est mis en oeuvre à une température dans la gamme de 20 à 100°C, sous une pression globale dans la gamme de 5 à 150 bars, un rapport molaire de l'oléfine par rapport au monoxyde de carbone dans le mélange devant être polymérisé se situant dans la gamme de 10:1 à 1:10, et en utilisant une quantité de composition catalytique telle qu'elle renferme de $10^{-7}$ à $10^{-3}$ mole de palladium par mole d'oléfine devant être polymérisée.

6. Procédé tel que revendiqué dans la revendication 4 ou 5, caractérisé en ce qu'est mise en oeuvre une composition catalytique qui comporte 0,5 à 50 moles de composant b) et de 0,5 à 2 moles du composant c) par mole de palladium.

7. Procédé tel que revendiqué dans une ou plus d'une des revendicatins 4 à 6, caractérisé en ce qu'est utilisée une composition catalytique qui comporte comme composant c) une bisphosphine dans laquelle les groupes $R^3$ et $R^4$ renferment chacun au maximum 10 atomes de carbone.

8. Procédé tel que revendiqué dans la revendication 7, caractérisé en ce qu'est utilisée une composition catalytique qui renferme comme composant c) une bisphosphine dans laquelle les groupes $R^3$ et $R^4$ sont des groupes identiques.

9. Procédé tel que revendiqué dans une ou plus d'une des revendications 4 à 8, caractérisé en ce qu'est utilisé une composition catalytique qui comporte comme composant c) une bisphosphine dans laquelle deux ou plus de deux des atomes de carbone dans le pont qui relie les deux atomes de phosphore font partie, individuellement ou conjointement, une structure cyclique.

10. Procédé tel que revendiqué dans une ou plus d'une des revendications 4 à 9, caractérisé en ce qu'est mise en oeuvre une composition catalytique qui comporte comme composant c) une bisphosphine qui est optiquement active, telle que le (+) ou (-)-4,5-bis-(diphénylphosphinométhyl)-2,2-diméthyl-1,3-dioxolane ou le (-)-4,5-bis-(dibutylphosphinométhyl)-2,2-diméthyl-1,3-dioxolane.